# EUROPEAN PATENT APPLICATION

(11) **EP 4 554 069 A1**
(43) Date of publication of application: **14.05.2025**
(21) Application number: 23835323.9
(22) Date of filing: 22.06.2023
(51) Int. Cl.: H02K 15/095

(54) **WIRE ROD WINDING METHOD**

(30) Priority: 07.07.2022 JP 2022109543
(71) Applicant: NITTOKU Co., Ltd., Saitama-city, Saitama 3300841 (JP)
(72) Inventor: KAWAGUCHI, Norimasa, Fukushima-shi, Fukushima 960-1393 (JP)
(74) Representative: Grünecker Patent- und Rechtsanwälte PartG mbB
(86) International application number: PCT/JP2023/023168
(87) International publication number: WO 2024/009789

(57) **Abstract**

A winding method of a wire rod includes a step of winding the wire rod (12) delivered from a tip end of a nozzle (11) around magnetic poles (13b, 63b) by revolving the tip end of the nozzle (11) around a magnetic pole (13b, 63b) of the magnetic poles (13b, 63b) by combining swinging of the magnetic pole (13b, 63b) about a center axis (O) of a stator core (13, 63) and a relative movement of the nozzle (11) in an axial direction of the stator core (13, 63) with respect to a slot (13c, 63c) between the magnetic poles (13b, 63b), wherein by moving the nozzle (11) in a radial direction of the stator core (13, 63) while the magnetic pole (13b, 63b) is being swung, the tip end of the nozzle (11) from which the wire rod (12) is delivered is moved linearly relative to a width direction of the magnetic pole (13b, 63b).

## Description

### TECHNICAL FIELD

The present invention relates to a winding method of winding a wire rod delivered from a nozzle around a magnetic pole.

### BACKGROUND ART

Conventionally, a stator of an inner rotor motor is formed by winding a wire rod around a plurality of magnetic poles that project towards the inner circumferential side of a stator core formed by stacking a plurality of annular members, and a stator of an outer rotor motor is formed by winding the wire rod around a plurality of magnetic poles that project radially from the outer circumferential side of the stator core.

As a winding device for each of the magnetic poles of the stator core, the present applicant has proposed a winding device including stator support means that supports the stator core so as to be rotatable about the center axis of the stator, serving as the rotation center, and a moving mechanism that moves the nozzle in each of the three axial directions (for example, see JP10-271774).

With this winding device, by combining the rotation of the stator core and the movement of the nozzle, which delivers the wire rod, in the axial direction of the stator, a tip end of the nozzle that is a wire-rod delivery end is moved by revolving around the magnetic pole, and thereby, the wire rod delivered from the tip end is wound around the magnetic pole. By precisely controlling the rotation of the stator core and the movement of the nozzle in the axial direction, it is possible to obtain the stator in which the wire rod is wound in alignment around each of the magnetic poles.

### SUMMARY OF INVENTION

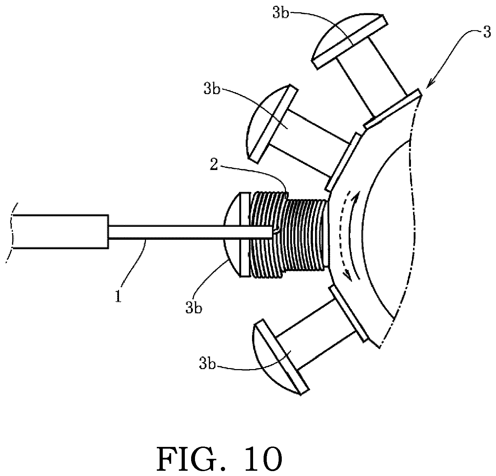

However, as indicated by a solid arrow and a broken line arrow in FIG. 10, when a stator core 3 is rotated, magnetic poles 3b projecting in the radial direction of the stator core 3 undergo an arc motion. Therefore, when the stator core 3 is rotated and a wire rod 2 delivered from a tip end of a nozzle 1 is wound around one of the magnetic poles 3b, the tip end of the nozzle 1 undergoes an arc-like relative movement with respect to the magnetic pole 3b, and the wire rod 2 delivered from the tip end of the nozzle 1 is wound around the magnetic pole 3b in the arc shape.

The wire rod 2 delivered from the tip end of the nozzle 1, which is moved relatively in the arc shape with respect to the magnetic pole 3b, is wound in a state in which an arc-shaped pattern is formed, and so, the tension of the wire rod 2 wound around the magnetic pole 3b tends to vary. Such a variation in tension becomes an obstacle when the wire rod 2 is wound in alignment around the magnetic pole 3b, and as a result, it becomes difficult to improve a space factor of the wire rod 2 for the magnetic pole 3b.

An object of the present invention is to improve a space factor of a wire rod for a magnetic pole of a stator core by winding the wire rod around the magnetic pole with high accuracy.

According to one aspect of the present invention, a winding method of a wire rod includes a step of winding the wire rod delivered from a tip end of a nozzle around magnetic poles by revolving the tip end of the nozzle around a magnetic pole of the magnetic poles by combining swinging of the magnetic pole about a center axis of a stator core and a relative movement of the nozzle in an axial direction of the stator core with respect to a slot between the magnetic poles, wherein by moving the nozzle in a radial direction of the stator core while the magnetic pole is being swung, the tip end of the nozzle from which the wire rod is delivered is moved linearly relative to a width direction of the magnetic pole.

### BRIEF DESCRIPTION OF DRAWINGS

[FIG. 1] FIG. 1 is a diagram showing a winding method according to a first embodiment of the present invention, and is a sectional view taken along line A-A in FIG. 4.
[FIG. 2] FIG. 2 is a diagram showing movement of a nozzle with respect to magnetic pole.
[FIG. 3] FIG. 3 is a diagram of a stator of an outer rotor type in which a wire rod is wound around the magnetic pole viewed from the axial direction.
[FIG. 4] FIG. 4 is a front view of a winding device capable of carrying out the winding method according to the first embodiment of the present invention.
[FIG. 5] FIG. 5 is a diagram showing the winding method according to a second embodiment of the present invention.
[FIG. 6] FIG. 6 is a diagram showing movement of the nozzle with respect to the magnetic pole.
[FIG. 7] FIG. 7 is a diagram of a stator of an inner rotor type viewed from the axial direction.
[FIG. 8] FIG. 8 is a perspective view showing a winding device capable of carrying out the winding method according to the second embodiment of the present invention.
[FIG. 9] FIG. 9 is a sectional view taken along line B-B in FIG. 8.
[FIG. 10] FIG. 10 is a diagram showing a conventional winding method, and is a diagram corresponding to FIG. 1.

### DESCRIPTION OF EMBODIMENTS

An embodiment of the present invention will be described below with reference to the drawings.

### <First Embodiment>

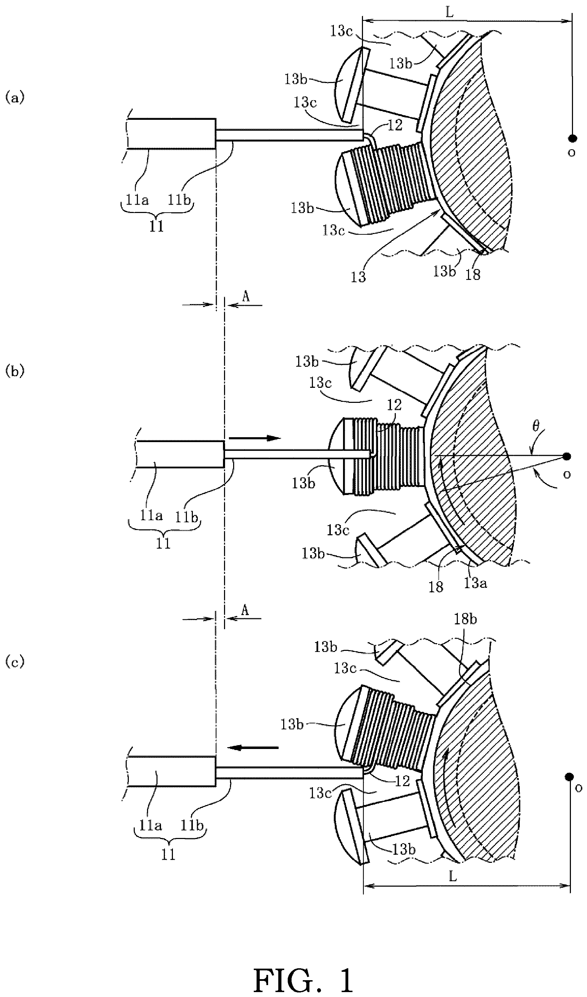

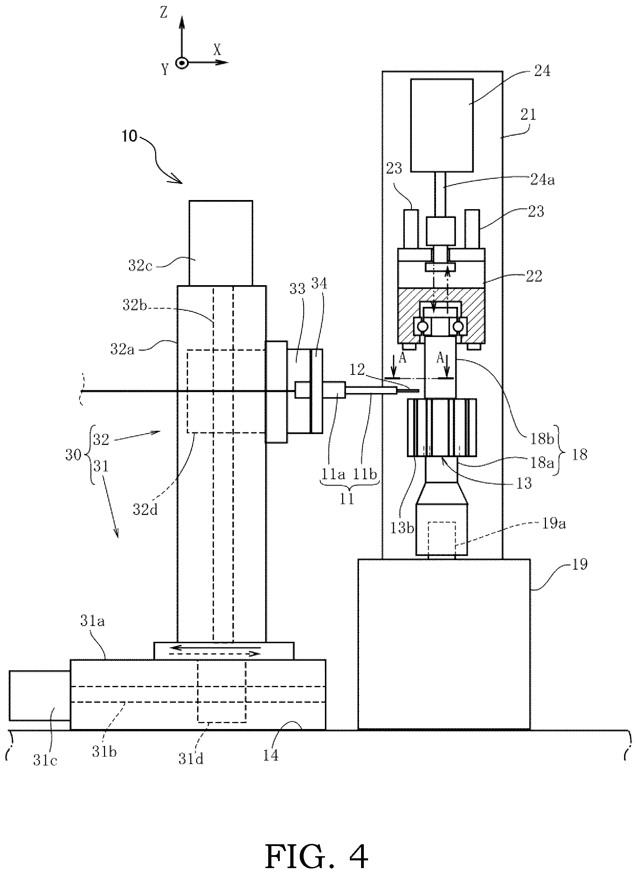

A first embodiment will be described first with reference to FIGs. 1 to 4. FIG. 4 shows a winding device 10 capable of carrying out a winding method according to this first embodiment. In FIG. 4, three axes X, Y, and Z that are mutually orthogonal are set, and the winding device 10 will be described by stating that the X axis extends in the substantially horizontal transverse direction, the Y axis extends in the substantially horizontal front-rear direction, and the Z axis extends in the vertical direction.

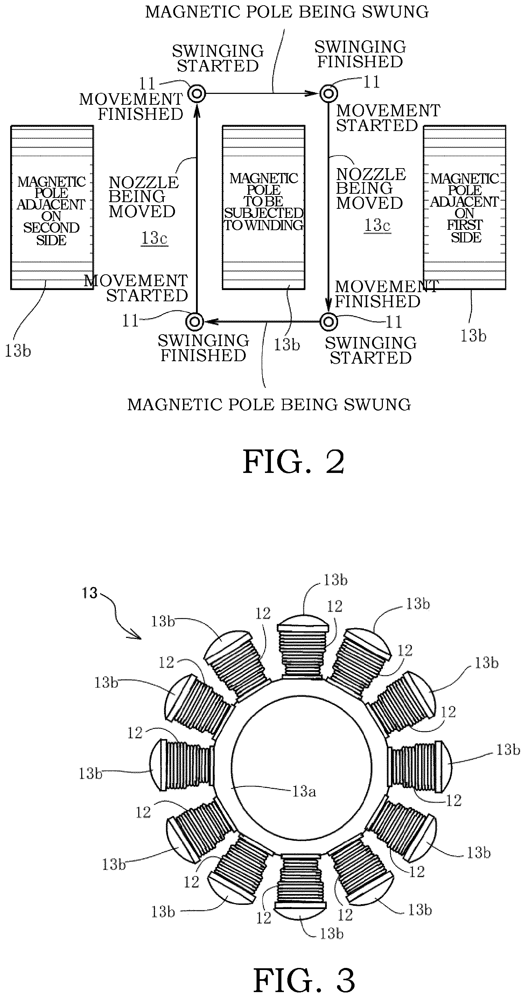

The winding device 10 is configured to wind a wire rod 12 delivered from a nozzle 11 around each of magnetic poles 13b of a stator core 13. As shown in FIG. 3, the stator core 13 in this first embodiment is of an outer rotor type, and includes an annular portion 13a having an annular shape and a plurality of magnetic poles 13b that project radially outward from an outer circumferential surface of the annular portion 13a.

As shown in FIG. 4, the winding device 10 includes a support tool 18 that supports the stator core 13 on an upper surface of a mount base 14 and a swinging servomotor 19 that rotates the support tool 18. The servomotor 19 is attached to the upper surface of the mount base 14 such that a rotation shaft 19a is directed upward in the Z axis direction. An attachment plate 21 is erected on the upper surface of the mount base 14 so as to be displaced in the Y axis direction from the servomotor 19.

The support tool 18 that supports the stator core 13 has a rod-shaped core rod 18a extending in the vertical direction, on an upper end edge of which the stator core 13 is mounted horizontally, and a pressing member 18b that presses the stator core 13 mounted on the upper end edge of the core rod 18a from above. A lower part of the core rod 18a is attached to the rotation shaft 19a of the servomotor 19, and an upper part of the core rod 18a is formed to have the outer diameter that is slightly smaller than the outer diameter of the annular portion 13a of the stator core 13 (see FIG. 3).

A linear motion guide rail 23 extends in the vertical direction and is attached to the side of the attachment plate 21 facing the servomotor 19. An elevating member 22 is attached to the guide rail 23 so as to be movable up and down. The pressing member 18b is attached to the elevating member 22 such that the center vertical axis thereof coincides with the center axis of the core rod 18a and so as to be rotatable about the vertical axis serving as the rotation center. An elevating cylinder 24 for moving the elevating member 22, together with the pressing member 18b, up and down is provided above the elevating member 22 on the attachment plate 21.

A lower part of the pressing member 18b that presses the stator core 13 mounted on the upper end edge of the core rod 18a from above is formed to have the outer diameter that is slightly smaller than the outer diameter of the annular portion 13a of the stator core 13. The annular portion 13a of the stator core 13 is clamped by the core rod 18a and the pressing member 18b.

Because a lower end of the core rod 18a is attached to the rotation shaft 19a of the servomotor 19, as the rotation shaft 19a of the servomotor 19 is rotated, the core rod 18a is also rotated together with the rotation shaft 19a. With such a configuration, the stator core 13 clamped by the core rod 18a and the pressing member 18b is rotated about the center axis of the support tool 18 formed of the core rod 18a and the pressing member 18b.

Because the stator core 13 is mounted on the upper end edge of the core rod 18a such that the center thereof coincides with the center axis of the support tool 18 and is clamped with the pressing member 18b, the magnetic poles 13b around the stator core 13 swing by the rotation of the stator core 13.

The winding device 10 further includes the nozzle 11 that delivers the wire rod 12 and a nozzle moving mechanism 30 that moves the nozzle 11. The nozzle moving mechanism 30 includes: a front-rear direction driving unit 31 that is provided on the upper surface of the mount base 14 so as to be adjacent to the servomotor 19, serving as a stator core operation mechanism, and that moves the nozzle 11 in the X direction; and a vertical direction driving unit 32 that moves the nozzle 11 in parallel to the center axis of the stator core 13.

The front-rear direction driving unit 31 has: a front-rear direction guide 31a that is provided on the mount base 14 so as to extend along the X axis that is the driving direction; a front-rear direction rotation shaft 31b that is provided so as to extend in parallel to the front-rear direction guide 31a and that has a helicoidal external thread on an outer circumferential surface thereof; a front-rear direction moving member 31d that is screwed to the front-rear direction rotation shaft 31b via a ball screw and that is movable along the front-rear direction guide 31a by the rotation of the front-rear direction rotation shaft 31b; and a front-rear direction driving source 31c that rotationally drives the front-rear direction rotation shaft 31b.

The front-rear direction driving source 31c in this first embodiment is a servomotor that can be controlled with high accuracy. The vertical direction driving unit 32 is attached to the front-rear direction moving member 31d that is moved as the front-rear direction driving source 31c is driven.

The vertical direction driving unit 32 has: a vertical direction guide 32a that is erected on the front-rear direction moving member 31d along the Z axis that is the driving direction; a vertical direction rotation shaft 32b that is provided in parallel with the vertical direction guide 32a and has a helicoidal external thread provided on an outer circumferential surface thereof; a vertical direction moving member 32d that is screwed to the vertical direction rotation shaft 32b via a ball screw and that is movable along the vertical direction guide 32a by the rotation of the vertical direction rotation shaft 32b; and a vertical direction driving source 32c that rotationally drives the vertical direction rotation shaft 32b.

The vertical direction driving source 32c in this first embodiment is also a servomotor that can be controlled with high accuracy. A movable stage 33 is attached to the vertical direction moving member 32d that is moved as the vertical direction driving source 32c is driven. An extension plate 34 extending in the Y axis direction is fixed to the movable stage 33, and the nozzle 11 extending in the X axis direction is fixed to the extension plate 34.

The nozzle 11 has a large-diameter portion 11a that is fixed to the extension plate 34 and a small-diameter portion 11b that is provided so as to be continuous with the large-diameter portion 11a. As shown in FIG. 1, the small-diameter portion 11b is provided coaxially with the large-diameter portion 11a and is formed to have the outer diameter that allows entrance to a slot 13c between the adjacent magnetic poles 13b of the stator core 13. In the large-diameter portion 11a and the small-diameter portion 11b, a through hole, through which the wire rod 12 can be inserted, is provided so as to penetrate through their center axes, and the wire rod 12 inserted through the through hole can be delivered from a tip end of the small-diameter portion 11b.

Next, the winding method according to this first embodiment using the winding device 10 will be described.

As indicated by a solid arrow in FIG. 4, the front-rear direction driving unit 31 first moves the front-rear direction moving member 31d, together with the vertical direction driving unit 32, away from the support tool 18. In this state, the stator core 13 is caused to be supported by the support tool 18.

Specifically, by retracting a rod 24a of the elevating cylinder 24 and by lifting the elevating member 22 as indicated by a one-dot chain line arrow, the pressing member 18b attached to the elevating member 22 is lifted to make a space between the pressing member 18b and the core rod 18a. By using this space, the stator core 13 is mounted horizontally on the upper edge of the core rod 18a.

Next, by advancing the rod 24a of the elevating cylinder 24 and lowering the elevating member 22 as indicated by a two-dot chain line arrow, the pressing member 18b is lowered to press the stator core 13, which is mounted on the upper edge of the core rod 18a, by the pressing member 18b from above, as shown in FIG. 4. Thereafter, the front-rear direction driving unit 31 moves the front-rear direction moving member 31d, together with the vertical direction driving unit 32 and the nozzle 11, closer to the stator core 13 as indicated by a broken line arrow in FIG. 4.

Next, the end portion of the wire rod 12 delivered from the tip end of the nozzle 11 is fixed by being fastened to an anchor pin or a wire clamping device (not shown). The above are the preparation steps before winding. Next, winding is performed.

As shown in FIG. 2, in the winding method according to this first embodiment, by combining the swinging of the magnetic pole 13b with the movement of the nozzle 11 in the axial direction (the center axis O direction) of the stator core 13 within the slot 13c between the adjacent magnetic poles 13b, the tip end of the nozzle 11 is caused to revolve around the magnetic pole 13b, and thereby, as shown in FIG. 1, the wire rod 12 delivered from the tip end of the nozzle 11 is wound around the magnetic pole 13b. Details will be described below.

In the winding device 10 shown in FIG. 4, the nozzle 11 is first moved closer to the stator core 13 by the front-rear direction driving unit 31, and as shown in FIG. 2, the tip end of the nozzle 11, in other words, the tip end of the small-diameter portion 11b serving as a wire rod delivery end is caused to oppose to or enter the slot 13c that is formed between the adjacent magnetic poles 13b of the stator core 13. At this time, the nozzle 11 is arranged along the radial direction of the stator core 13 that is the axial direction of the magnetic pole 13b (see FIG. 1). Specifically, the nozzle 11 is arranged such that the axial direction of the nozzle 11 coincides with the radial direction of the stator core 13. In other words, the nozzle 11 is arranged such that the center axial line of the nozzle 11 passes through the center axis O of the stator core 13.

The relative movement of the nozzle 11 in the axial direction of the stator core 13 is achieved by moving the nozzle 11 in the Z axis direction by the vertical direction driving unit 32. As described above, when the tip end of the nozzle 11 is positioned in the slot 13c between the magnetic pole 13b to be subjected to the winding and the magnetic pole 13b that is adjacent on the first side, the swinging of the magnetic pole 13b by the servomotor 19 is not performed, and only the nozzle 11 is moved in the axial direction of the stator core 13.

On the other hand, as shown in FIG. 2, the swinging of the magnetic pole 13b about the center axis O of the stator core 13 serving as the rotation center is started in a state in which the tip end of the nozzle 11 is moved out from the slot 13c, and the swinging is finished at a stage where the tip end of the nozzle 11 opposes to the slot 13c formed between the magnetic pole 13b to be subjected to the winding and the magnetic pole 13b that is adjacent on the second side.

By alternately repeating the movement of the nozzle 11 and the swinging of the magnetic pole 13b, as described above, the nozzle 11 undergoes a relative movement around the magnetic pole 13b along the cross-sectional shape of the magnetic pole 13b. As a result, the wire rod 12 delivered from the tip end of the nozzle 11 is wound around the magnetic pole 13b.

In this first embodiment, as shown in FIG. 1, by moving the nozzle 11 in the radial direction of the stator core 13 while the magnetic pole 13b is being swung, the tip end of the nozzle 11, from which the wire rod 12 is delivered, is moved linearly relative to the width direction of the magnetic pole 13b with respect to the magnetic pole 13b.

In other words, because the swinging of the magnetic pole 13b to be subjected to the winding is performed by rotating the stator core 13 about its center axis serving as the rotation center, as shown in FIG. 10, when the magnetic pole 13b is swung in a state in which the nozzle 11 is stationary, the tip end of the nozzle 11 from which the wire rod 12 is delivered undergoes the relative movement with respect to the magnetic pole 13b in the circumferential direction of the stator core 13 by drawing an arc-shaped trajectory.

In contrast, in the winding method according to this first embodiment, the nozzle 11 is reciprocatingly moved in the radial direction of the stator core 13 (in the X axis direction) by an amount corresponding to a displacement in the radial direction of the stator core 13 that would otherwise be caused for the wire rod 12 to be wound around the magnetic pole 13b as the tip end of the nozzle 11 undergoes the arc-like relative movement in the swinging direction, and thereby, the tip end of the nozzle 11 is caused to undergo a linear relative movement in the width direction (in the swinging direction) of the magnetic pole 13b with respect to the magnetic pole 13b. In other words, in the conventional winding method, while the magnetic pole 13b is being swung, the tip end of the nozzle 11 draws the trajectory through which it undergoes the arc-like relative movement with respect to the magnetic pole 13b, whereas in the winding method according to this first embodiment, while the magnetic pole 13b is being swung, the tip end of the nozzle 11 draws the trajectory through which it undergoes the linear relative movement in the width direction of the magnetic pole 13b with respect to the magnetic pole 13b. Details will be described below.

From a state shown in FIG. 1(a) in which the tip end of the nozzle 11 is moved out from the slot 13c, the swinging of the magnetic pole 13b is started. At the time of starting the swinging of the magnetic pole 13b, the distance between the tip end of the nozzle 11 and the center axis O of the stator core 13 is defined as L (the state shown in FIG. 1(a)). When the magnetic pole 13b is being swung, as shown in FIG. 1(b), the nozzle 11 is gradually moved closer to the rotation center of the magnetic pole 13b (the center axis O of the stator core 13) until the tip end of the nozzle 11 reaches the center of the magnetic pole 13b in the width direction. In other words, the nozzle 11 is moved closer to the center axis O of the stator core 13 until the tip end of the nozzle 11 reaches the center of the magnetic pole 13b in the width direction from the start of the swinging of the magnetic pole 13b. The moved amount by which the nozzle 11 is moved closer to the center axis O of the stator core 13 is A.

After the tip end of the nozzle 11 has reached the center of the magnetic pole 13b in the width direction while the magnetic pole 13b is being swung, as shown in FIG. 1(c), the nozzle 11 is gradually moved away from the rotation center of the magnetic pole 13b (the center axis O of the stator core 13) until the end of the swinging at which the tip end of the nozzle 11 opposes to the slot 13c between the magnetic pole 13b to be subjected to the winding and the magnetic pole 13b that is adjacent on the second side. In other words, the nozzle 11 is moved away from the center axis O of the stator core 13 until the end of the swinging after the tip end of the nozzle 11 has reached the center of the magnetic pole 13b in the width direction. The moved amount by which the nozzle 11 is moved away from the center axis O of the stator core 13 is A, and this is the same as the moved amount by which the nozzle 11 is moved closer to the center axis O of the stator core 13. In other words, while the magnetic pole 13b is being swung, the nozzle 11 is reciprocatingly moved in the radial direction of the stator core 13 by the moved amount A. Therefore, at the time of the end of the swinging of the magnetic pole 13b (the state shown in FIG. 1(c)), the distance between the tip end of the nozzle 11 and the center axis O of the stator core 13 is L, and this coincides with the distance between the tip end of the nozzle 11 and the center axis O of the stator core 13 at the time of starting the swinging of the magnetic pole 13b.

As described above, while the magnetic pole 13b is being swung, the nozzle 11 is moved closer to the center axis O of the stator core 13 until the tip end of the nozzle 11 reaches the center of the magnetic pole 13b in the width direction, and after the tip end of the nozzle 11 has reached the center of the magnetic pole 13b in the width direction, the nozzle 11 is moved away from the center axis O of the stator core 13.

The moved amount A of the nozzle 11 is given by A = L(1 - COS θ), wherein θ is the swinging angle of the magnetic pole 13b, and L is the distance between the tip end of the nozzle 11 and the center axis O of the stator core 13 at the time of starting the swinging of the magnetic pole 13b. By setting the moved amount A of the nozzle 11 as described above, it becomes possible to cause the nozzle 11 to undergo the relative movement such that the trajectory of the tip end of the nozzle 11 while the magnetic pole 13b is being swung is linear in the width direction of the magnetic pole 13b.

As described above, by causing the tip end of the nozzle 11 to be moved linearly in the width direction of the magnetic pole 13b, the wire rod 12 delivered from the nozzle 11 is wound by being guided linearly in the width direction of the magnetic pole 13b, and therefore, as shown in FIG. 1, it is possible to linearly wind the wire rod 12 delivered from the tip end of the nozzle 11 around the magnetic pole 13b without forming the arc-shaped pattern to the wire rod 12. As a result, the tension of the wire rod 12 to be wound around the magnetic pole 13b is prevented from being varied, and so, it is possible to avoid irregular winding of the wire rod 12.

In order to wind the wire rod 12 in alignment around the magnetic pole 13b, while revolving the nozzle 11 around the magnetic pole 13b, the revolving position of the nozzle 11 with respect to the magnetic pole 13b needs to be moved in the X axis direction by the front-rear direction driving unit 31 by an amount corresponding to the diameter of the wire rod 12 for each winding turn of the wire rod 12 (for each revolution of the nozzle 11). The movement of the revolving position of the nozzle 11 is performed separately from the reciprocating movement (the reciprocating movement by the moved amount A) of the nozzle 11 in the X axis direction while the magnetic pole 13b is being swung.

Even in a state in which the revolving position of the nozzle 11 is moved in the axial direction of the magnetic pole 13b by an amount corresponding to the diameter of the wire rod 12, while the magnetic pole 13b is being swung, the nozzle 11 is reciprocatingly moved in the radial direction of the stator core 13, and the tip end of the nozzle 11 is moved linearly relative to the width direction of the magnetic pole 13b with respect to the magnetic pole 13b.

As a result, even in a state in which the revolving position of the nozzle 11 is displaced by an amount corresponding to the diameter of the wire rod 12, it is possible to linearly wind the wire rod 12 delivered from the tip end of the nozzle 11 around the magnetic pole 13b without forming the arc-shaped pattern to the wire rod 12, and to avoid the irregular winding of the wire rod 12. By repeating the revolution of the nozzle 11 as described above, it becomes possible to wind the wire rod 12 in alignment around the magnetic pole 13b with high accuracy, and so, it is possible to improve the space factor of the wire rod 12 on the magnetic pole 13b.

The winding as described above is performed on all of the magnetic poles 13b, and after the winding is finished on all of the magnetic poles 13b as shown in FIG. 3, the stator core 13 is removed from the support tool 18, and a series of winding operation is completed.

### <Second Embodiment>

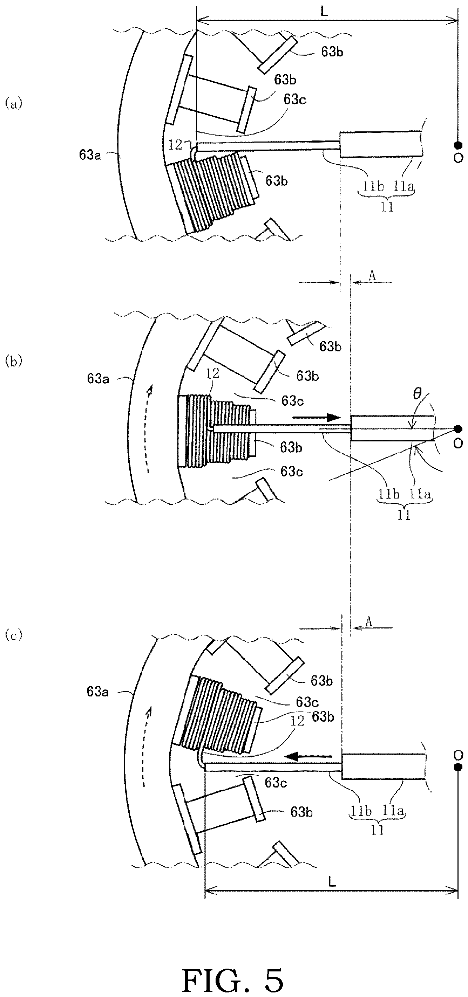

Next, a second embodiment of the present invention will be described with reference to FIGs. 5 to 9. In this second embodiment, the reference signs same as those in the above-described first embodiment show the configurations same as those in the above-described first embodiment, and the description thereof will be omitted.

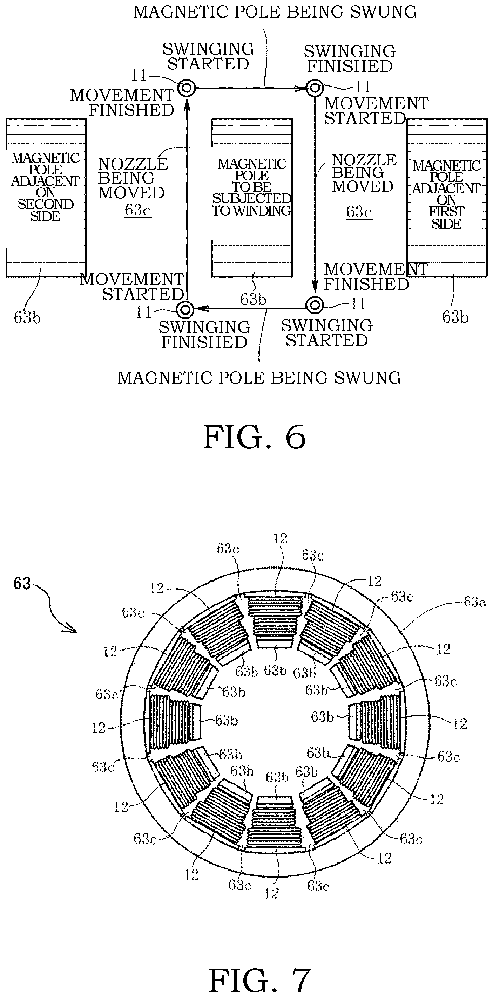

As shown in FIG. 7, a stator core 63 in this second embodiment is of an inner rotor type, and includes an annular portion 63a having an annular shape and a plurality of magnetic poles 63b that project towards the center of the annular portion 63a from an inner circumferential surface of the annular portion 63a.

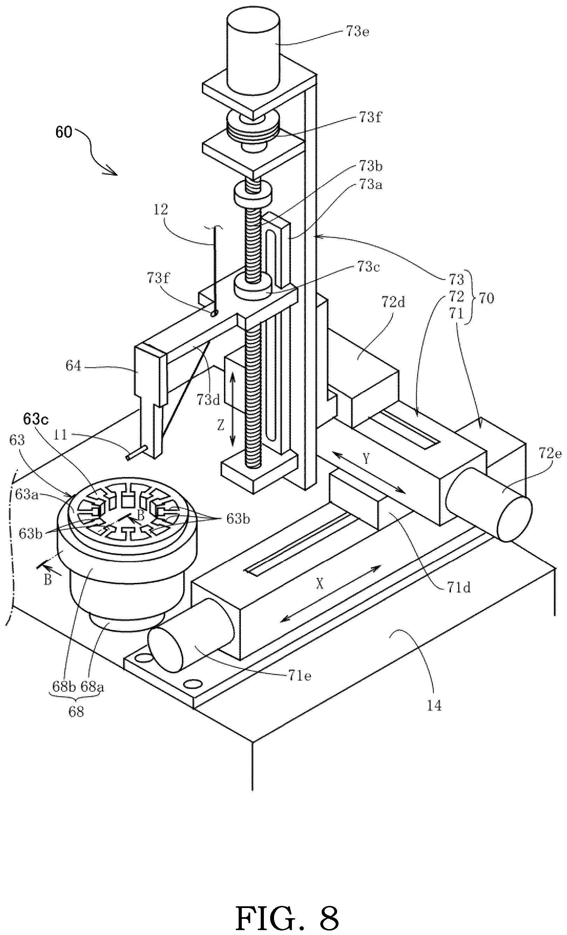

A winding device 60 that performs the winding for the magnetic pole 63b of the stator core 63 of an inner rotor type is shown in FIG. 8. A support device 68 on which the stator core 63 is to be mounted is provided on the mount base 14 of the winding device 60. The support device 68 includes a fixed table 68a that is provided on the mount base 14, a rotating table 68b that is attached to the fixed table 68a so as to be rotatable in the horizontal plane and on the upper side of which the stator core 63 can be mounted and fixed, and a swinging servomotor (not shown) that rotates the rotating table 68b.

The winding device 60 includes the mount base 14 on which the support device 68 is provided and a driving mechanism 70 that is provided on the mount base 14 and that serves as driving means for driving the nozzle 11 in three axial directions. The driving mechanism 70 is configured by combining driving units 71, 72, and 73 for the three axial directions, and has the front-rear direction driving unit 71, the left-right direction driving unit 72, and the up-down direction driving unit 73. The driving units 71, 72, and 73 are provided along the X axis direction, the Y axis direction, and the Z axis direction, respectively, and each has substantially the same driving mechanism.

The up-down direction driving unit 73 has: an up-down direction guide 73a that is provided along the Z axis direction; an up-down direction rotation shaft 73b that is provided in parallel with the up-down direction guide 73a and on an outer circumferential surface of which an external thread is formed; an up-down direction moving part 73c that is screwed to the up-down direction rotation shaft 73b via a ball screw and that can move along the up-down direction guide 73a; an up-down direction connecting part 73d that is connected to the up-down direction moving part 73c; and an up-down direction driving source 73e that rotationally drives the up-down direction rotation shaft 73b.

The front-rear direction driving unit 71 and the left-right direction driving unit 72 have the similar configuration as the up-down direction driving unit 73. The front-rear direction driving unit 71 is provided on the mount base 14 and has a front-rear direction driving source 71e. The left-right direction driving unit 72 can be moved in the front-rear direction via a front-rear direction connecting part 71d.

The left-right direction driving unit 72 has a left-right direction driving source 72e. The up-down direction driving unit 73 can be moved in the left-right direction via a left-right direction connecting part 72d. As the driving sources 71e, 72e, and 73e, for example, a servomotor that can be controlled with high accuracy is used.

A movable stage 64, which extends in parallel with the axial direction of the stator core 63 supported by the support device 68, is attached to a tip end of the up-down direction connecting part 73d of the up-down direction driving unit 73. A lower part of the movable stage 64 is formed to have a bar shape that can be inserted into the stator core 63, and the nozzle 11 is fixed along in the X axis direction in the vicinity of a lower end of the movable stage 64.

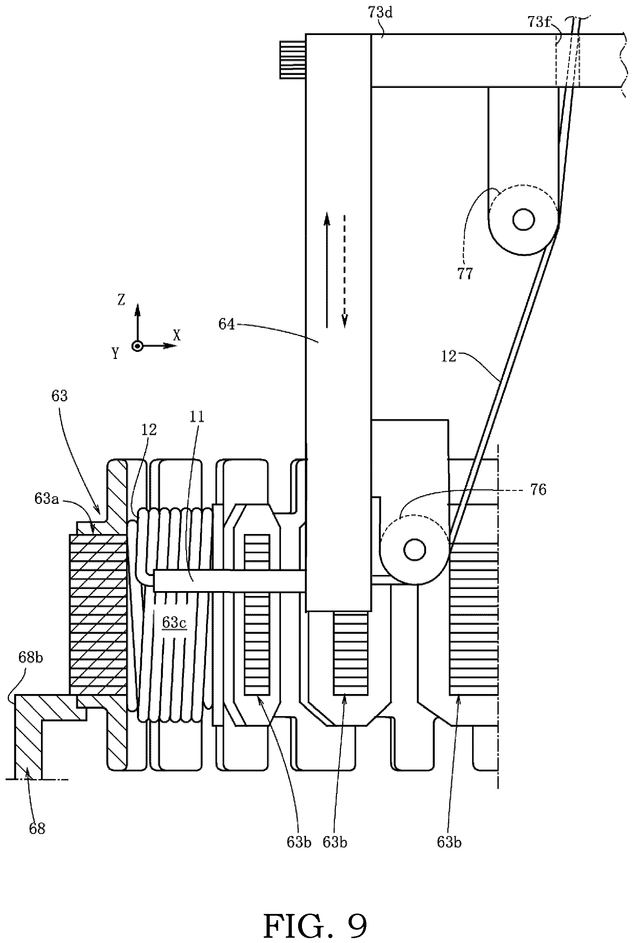

As shown in FIG. 9, a first pulley 76 that redirects the wire rod 12 is provided on the movable stage 64. In addition, the up-down direction connecting part 73d is formed with a through hole 73f through which the wire rod 12 is inserted and is provided with a second pulley 77 that redirects the wire rod 12. The wire rod 12 is inserted through the through hole 73f, guided to the nozzle 11 by being redirected by the second pulley 77 and the first pulley 76, and inserted through the nozzle 11 and delivered from the tip end of the nozzle 11.

Next, the winding method according to this embodiment using the winding device 60 will be described.

Upon performing the winding operation using the winding device 60, the wire rod 12 is first inserted through the nozzle 11 and delivered from the tip end of the nozzle 11. Next, the end portion of the wire rod 12 delivered from the tip end of the nozzle 11 is fixed by being fastened to the anchor pin or the wire clamping device (not shown). Thereafter, by driving the driving mechanism 70, as shown in FIG. 9, the nozzle 11 that is arranged horizontally is moved to a slot 63c between the magnetic pole 63b on which the winding is to be performed and the magnetic pole 63b that is adjacent thereto of the stator core 63. At this time, the nozzle 11 is arranged along the radial direction of the stator core 63 that is the axial direction of the magnetic pole 63b. Specifically, the nozzle 11 is arranged such that the axial direction of the nozzle 11 coincides with the radial direction of the stator core 63. In other words, the nozzle 11 is arranged such that the center axial line of the nozzle 11 passes through the center axis O of the stator core 63.

In the winding method according to this second embodiment, the nozzle 11 is reciprocatingly moved in the Z axis direction by the driving mechanism 70, and the rotating table 68b is rotated in the forward direction and the reverse direction by the servomotor of the support device 68 such that the magnetic pole 63b is swung. By combining these movements, as shown in FIG. 6, the nozzle 11 is caused to undergo the relative movement around the magnetic pole 63b along the cross-sectional shape of the magnetic pole 63b.

When the tip end of the nozzle 11 is positioned in the slot 63c between the magnetic pole 63b to be subjected to the winding and the magnetic pole 63b that is adjacent on the first side, the movement of the nozzle 11 in the Z axis direction is performed by moving only the nozzle 11 up and down without performing the swinging of the magnetic pole 63b by the servomotor.

Then, after the tip end of the nozzle 11 is moved out from the slot 63c, the swinging of the magnetic pole 63b is started, and the swinging is finished at the time when the tip end of the nozzle 11 is positioned below or above the slot 63c between the magnetic pole 63b to be subjected to the winding and the magnetic pole 63b that is adjacent on the second side. The swinging of the magnetic pole 63b is performed by rotating the stator core 63, and the rotation of the stator core 63 is performed by the servomotor of the support device 68.

By alternately repeating the movement of the nozzle 11 and the swinging of the magnetic pole 63b by the rotation of the stator core 63, as indicated by an arrow in FIG. 6, the nozzle 11 is caused to undergo the relative movement around the magnetic pole 63b along the cross-sectional shape of the magnetic pole 63b.

In this second embodiment, as shown in FIG. 5, by moving the nozzle 11 in the radial direction of the stator core 63 while the magnetic pole 63b is being swung, the tip end of the nozzle 11 from which the wire rod 12 is delivered is moved linearly relative to the width direction of the magnetic pole 63b with respect to the magnetic pole 63b.

In other words, because the swinging of the magnetic pole 63b to be subjected to the winding is performed by rotating the stator core 63 about its center axis O serving as the rotation center, as shown in FIG. 10, when the magnetic pole 63b is swung in a state in which the nozzle 11 is fixed, the tip end of the nozzle 11 from which the wire rod 12 is delivered undergoes the relative movement in the circumferential direction of the stator core 63 by drawing the arc-shaped trajectory with respect to the magnetic pole 63b.

In contrast, in the winding method according to this second embodiment, similarly to the above-described first embodiment, the nozzle 11 is reciprocatingly moved in the radial direction of the stator core 63 (in the X axis direction) by an amount corresponding to the displacement in the radial direction of the stator core 63 that would otherwise be caused for the wire rod 12 to be wound around the magnetic pole 63b as the tip end of the nozzle 11 undergoes the arc-like relative movement in the swinging direction, and thereby, the tip end of the nozzle 11 is caused to undergo the linear relative movement in the width direction (in the swinging direction) of the magnetic pole 63b with respect to the magnetic pole 63b.

Specifically, from a state shown in FIG. 5(a) in which the tip end of the nozzle 11 is moved out from the slot 63c, the swinging of the magnetic pole 63b is started. At the time of starting the swinging of the magnetic pole 63b, the distance between the tip end of the nozzle 11 and the center axis O of the stator core 63 is defined as L (the state shown in FIG. 5(a)). When the magnetic pole 63b is being swung, as shown in FIG. 5(b), the nozzle 11 is moved closer to the rotation center of the magnetic pole 63b (the center axis O of the stator core 63) until the tip end of the nozzle 11 reaches the center of the magnetic pole 63b in the width direction. In other words, the nozzle 11 is moved closer to the center axis O of the stator core 63 until the tip end of the nozzle 11 reaches the center of the magnetic pole 63b in the width direction from the start of the swinging of the magnetic pole 63b. The moved amount by which the nozzle 11 is moved closer to the center axis O of the stator core 63 is A.

After the tip end of the nozzle 11 has reached the center of the magnetic pole 63b in the width direction while the magnetic pole 63b is being swung, as shown in FIG. 5(c), the nozzle 11 is moved away from the rotation center of the magnetic pole 63b (the center axis O of the stator core 63) until the end of the swinging at which the tip end of the nozzle 11 opposes to the slot 63c between the magnetic pole 63b to be subjected to the winding and the magnetic pole 63b that is adjacent on the second side. In other words, the nozzle 11 is moved away from the center axis O of the stator core 63 until the end of the swinging after the tip end of the nozzle 11 has reached the center of the magnetic pole 63b in the width direction. The moved amount by which the nozzle 11 is moved away from the center axis O of the stator core 63 is A, and this is the same as the moved amount by which the nozzle 11 is moved closer to the center axis O of the stator core 63. In other words, while the magnetic pole 63b is being swung, the nozzle 11 is reciprocatingly moved in the radial direction of the stator core 63 by the moved amount A. Therefore, at the time of the end of the swinging of the magnetic pole 63b (the state shown in FIG. 5(c)), the distance between the tip end of the nozzle 11 and the center axis O of the stator core 63 is L, and this coincides with the distance between the tip end of the nozzle 11 and the center axis O of the stator core 63 at the time of starting the swinging of the magnetic pole 63b.

As described above, while the magnetic pole 63b is being swung, the nozzle 11 is moved closer to the center axis O of the stator core 63 until the tip end of the nozzle 11 reaches the center of the magnetic pole 63b in the width direction, and after the tip end of the nozzle 11 has reached the center of the magnetic pole 63b in the width direction, the nozzle 11 is moved away from the center axis O of the stator core 63.

The relationship among the moved amount A, the swinging angle θ, and the distance L is the same as that in the above-described first embodiment, and by doing so, it becomes possible to cause the nozzle 11 to undergo the relative movement such that the trajectory of the tip end of the nozzle 11 while the magnetic pole 63b is being swung is linear in the width direction of the magnetic pole 63b.

As described above, by causing the tip end of the nozzle 11 to be moved linearly in the width direction of the magnetic pole 63b, the wire rod 12 delivered from the nozzle 11 is wound by being guided linearly in the width direction of the magnetic pole 63b, and therefore, as shown in FIG. 5, it is possible to linearly wind the wire rod 12 delivered from the tip end of the nozzle 11 around the magnetic pole 63b without forming the arc-shaped pattern on the wire rod 12. As a result, the tension of the wire rod 12 to be wound around the magnetic pole 63b is prevented from being varied, and so, it is possible to avoid the irregular winding of the wire rod 12.

In order to wind the wire rod 12 in alignment around the magnetic pole 63b, while revolving the nozzle 11 around the magnetic pole 63b, the revolving position of the nozzle 11 with respect to the magnetic pole 63b needs to be moved in the X axis direction by an amount corresponding to the diameter of the wire rod 12 for each winding turn of the wire rod 12 (for each revolution of the nozzle 11). The movement of the revolving position of the nozzle 11 is performed separately from the reciprocating movement (the reciprocating movement by the moved amount A) of the nozzle 11 in the X axis direction while the magnetic pole 63b is being swung.

Even in a state in which the revolving position of the nozzle 11 is moved in the axial direction of the magnetic pole 63b by an amount corresponding to the diameter of the wire rod 12, while the magnetic pole 63b is being swung, the nozzle 11 is reciprocatingly moved in the radial direction of the stator core 63, and the tip end of the nozzle 11 is caused to undergo the linear relative movement in the width direction of the magnetic pole 63b with respect to the magnetic pole 63b.

As a result, even in a state in which the revolving position of the nozzle 11 is displaced by an amount corresponding to the diameter of the wire rod 12, it is possible to linearly wind the wire rod 12 delivered from the tip end of the nozzle 11 around the magnetic pole 63b without forming the arc-shaped pattern to the wire rod 12, and to avoid the irregular winding of the wire rod 12. By repeating the revolution of the nozzle 11 as described above, it becomes possible to wind the wire rod 12 in alignment around the magnetic pole 63b with high accuracy, and so, it is possible to improve the space factor of the wire rod 12 on the magnetic pole 63b.

The winding as described above is performed on all of the magnetic poles 63b, and after the winding is finished on all of the magnetic poles 63b as shown in FIG. 7, the stator core 63 is removed from the support device 68, and a series of winding operation is completed.

In the above-described first and the second embodiments, a description has been given of a case in which the wire rod 12 is wound around the magnetic poles 13b, 63b by orienting the center axis O of the stator core 13, 63 in the vertical direction. However, this is merely an example, and in the winding method of the wire rod 12, the wire rod 12 may be wound around the magnetic poles 13b, 63b by orienting the center axis O of the stator core 13, 63 in the horizontal direction.

In the above-described first and the second embodiments, the movement of the nozzle 11 in the axial direction of the stator core 13, 63 in the slot 13c, 63c between the magnetic poles 13b, 63b is performed by the movement of the nozzle 11 itself. However, the movement of the nozzle 11 in the slot 13c, 63c may be achieved by moving the stator core 13, 63 in the axial direction. In other words, it suffices that the nozzle 11 is caused to undergo the relative movement in the axial direction of the stator core 13, 63 with respect to the slot 13c, 63c, and either one of the nozzle 11 and the stator core 13, 63 may be moved.

Embodiments of this invention were described above, but the above embodiments are merely examples of applications of this invention, and the technical scope of this invention is not limited to the specific constitutions of the above embodiments.

This application claims priority based on Japanese Patent Application No.2022-109543 filed with the Japan Patent Office on July 7, 2022, the entire contents of which are incorporated into this specification.

## Claims

1. A winding method of a wire rod comprising a step of winding the wire rod delivered from a tip end of a nozzle around magnetic poles by revolving the tip end of the nozzle around a magnetic pole of the magnetic poles by combining swinging of the magnetic pole about a center axis of a stator core and a relative movement of the nozzle in an axial direction of the stator core with respect to a slot between the magnetic poles, wherein
by moving the nozzle in a radial direction of the stator core while the magnetic pole is being swung, the tip end of the nozzle from which the wire rod is delivered is moved linearly relative to a width direction of the magnetic pole.

2. The winding method of the wire rod according to Claim 1, wherein
the nozzle is arranged along the radial direction of the stator core, and
while the magnetic pole is being swung, the nozzle is moved closer to the center axis of the stator core until the tip end of the nozzle reaches a center of the magnetic pole in the width direction, and the nozzle is moved away from the center axis of the stator core after the tip end of the nozzle reached the center of the magnetic pole in the width direction.

3. The winding method of the wire rod according to Claim 3, wherein
a moved amount A by which the nozzle is moved closer to the center axis of the stator core and a moved amount A by which the nozzle is moved away from the center axis of the stator core are given by A = L(1 - COS θ), wherein θ is a swinging angle of the magnetic pole, and L is a distance between the tip end of the nozzle and the center axis of the stator core at the time of starting the swinging of the magnetic pole.
